# FASCICULE DE BREVET EUROPEEN

(11) **EP 1 185 429 B1**
(45) Date de publication et mention de la délivrance du brevet: **09.04.2008**
(21) Numéro de dépôt: 01907854.2
(22) Date de dépôt: 21.02.2001
(51) Int. Cl.: B60H 1/00

(54) **DISPOSITIF DE CONDITIONNEMENT D'AIR POUR VEHICULE**
KLIMAANLAGE FÜR KRAFTFAHRZEUGE
AIR CONDITIONING DEVICE FOR MOTOR VEHICLE

(30) Priorité: 22.02.2000 FR 0002163
(43) Date de publication de la demande: 13.03.2002
(73) Titulaire: VALEO SYSTEMES THERMIQUES, 78320 Le Mesnil Saint-Denis (FR)
(72) Inventeur: VINCENT, Philippe, F-28230 Epernon (FR)
(74) Mandataire: Léveillé, Christophe
(86) Numéro de dépôt international: PCT/FR2001/000497
(87) Numéro de publication internationale: WO 2001/062530

(56) Documents cités:
- EP-A- 0 936 090
- DE-A- 19 908 998
- US-A- 5 988 263
- PATENT ABSTRACTS OF JAPAN vol. 012, no. 083 (M-677), 16 mars 1988 (1988-03-16) -& JP 62 225414 A (HITACHI LTD), 3 octobre 1987 (1987-10-03)

## Description

L'invention concerne le domaine des appareils de conditionnement d'air, notamment pour les véhicules automobiles.

Les appareils de conditionnement d'air pour véhicules comportent, en général, un conduit d'entrée d'air alimenté sélectivement en air extérieur ou en air recyclé prélevé dans l'habitacle, dans lequel sont montés un pulseur et un évaporateur, un boîtier de conditionnement d'air recevant l'air froid de l'évaporateur et comportant un conduit de transmission d'air froid et un conduit de dérivation dans lequel est monté un échangeur de chaleur, ces deux conduits se rejoignant dans une zone de mixage destinée à délivrer un air à la température requise, et un boîtier de distribution recevant l'air de la zone de mixage et le délivrant vers différentes bouches de diffusion d'air prévues dans l'habitacle.

Dans le boîtier de conditionnement, il est prévu un volet de mixage pour partager l'air froid délivré par l'évaporateur entre un flux froid et un flux d'air traversant l'échangeur de chaleur. Dans une position extrême de ce volet tout l'air transite par l'échangeur de chaleur et dans une autre position extrême aucun air ne transite par l'échangeur.

La zone de mixage d'air située à l'intersection du conduit d'air froid et du conduit de réchauffage reçoit un flux d'air froid et un flux d'air chaud à des vitesses différentes et dans des directions différentes. Ces deux flux d'air devraient se mélanger intimement, afin que la zone de mixage délivre un air à une température homogène.

Or, on constate qu'il se produit une stratification de l'air. A la sortie de la zone de mixage, l'air est plus froid du côté du conduit d'air froid et plus chaud du côté de la sortie du conduit de dérivation. Dans le boîtier de distribution, les conduits de délivrance d'air vers les bouches d'aération sont connectés de telle manière que les conduits d'aération des pieds, appelés également conduits de chauffage, reçoivent un air plus chaud que celui alimentant les conduits d'aération centrale ou latérale de l'habitacle. Mais en général les conduits de dégivrage reçoivent un air plus froid que celui délivré par les aérateurs, ce qui ne favorise pas le désembuage du pare-brise.

D'habitude, la zone de mixage est disposée dans la partie supérieure du boîtier de conditionnement d'air. Les conduits d'aération des pieds, ou plus généralement les conduits d'aération des zones basses de l'habitacle et de la zone arrière, s'étendent donc sur toute la hauteur dudit boîtier, et occupent une place non négligeable.

Dans certains appareils de conditionnement d'air, il est prévu deux zones de mixage, une zone de mixage supérieure destinée à fournir de l'air aux buses de dégivrage et aux bouches d'aération centrale et latérale montées sur la planche de bord, et une zone de mixage inférieure destinée à fournir de l'air conditionné dans la partie basse et la partie arrière de l'habitacle. Dans d'autres appareils, la zone de mixage supérieure est destinée à la diffusion avant (dégivrage, aérations centrale et latérales, pieds des passagers avant), et la zone de mixage inférieure est destinée à la diffusion à l'arrière de l'habitacle. Dans ce cas, il est prévu un conduit supplémentaire de transmission d'air froid dans le boîtier de conditionnement d'air pour alimenter cette deuxième zone de mixage. Le conduit de réchauffage est disposé entre les deux conduits de transmission d'air froid et alimente en air chaud les deux zones de mixage. Le conduit supplémentaire occupe également une place non négligeable et il est nécessaire de prévoir un deuxième système de mixage pour contrôler la température de l'air dans la deuxième zone de mixage et une pluralité de volets anti-retour.

Le but de l'invention est de proposer un dispositif de conditionnement d'air pour véhicule automobile, qui permette d'alimenter deux zones de mixage avec un seul système de mixage, sans nécessiter des volets anti-retour et en assurant une homogénéisation des températures dans chacune des zones de mixage.

Le but de l'invention est aussi de rendre plus perméable le circuit d'air vers la partie basse de l'appareil et donc de bénéficier d'un débit d'air plus important.

Le but de l'invention est également de proposer un dispositif de conditionnement d'air de l'habitacle d'un véhicule, qui soit peu encombrant, facile à réaliser et facile à assembler.

L'invention concerne donc un dispositif de chauffage, ventilation et/ou climatisation de l'habitacle d'un véhicule automobile, du type comportant dans un boîtier un premier conduit pour transmettre un flux d'air froid et un deuxième conduit, dans lequel est installé un échangeur de chaleur, pour transmettre de l'air chaud, lesdits conduits étant interposés entre une entrée d'air et une première zone de mixage délivrant de l'air mixé.

Un tel dispositif comporte en outre un système diviseur des flux d'air qui partage le flux d'air froid délivré par le premier conduit et le flux d'air chaud délivré par le deuxième conduit en une pluralité de flux secondaires, ce système diviseur comportant, transversalement en alternance, une pluralité de passages d'air froid ayant leurs entrées dans le premier conduit et une pluralité de passages d'air, chaud ayant leurs entrées dans le deuxième conduit. Un tel dispositif est notamment connu du document US-A-5 988 263. Selon l'invention lesdits passages présentent une première série de sorties délivrant en alternance de l'air froid et de l'air chaud dans une première zone de mixage et une deuxième série de sorties délivrant en alternance de l'air chaud et de l'air froid dans une deuxième zone de mixage.

De manière avantageuse, le système diviseur des flux d'air comporte une pluralité de plaques parallèles disposées transversalement dans le boîtier, à la jonction du premier conduit et du deuxième conduit, ces plaques étant reliées par paires dans le premier conduit et le deuxième conduit au moyen de parois de jonction, afin de définir les entrées des passages d'air froid dans le premier conduit et les entrées des passages d'air chaud dans le deuxième conduit.

Les dispositions suivantes sont en outre de préférence adoptées:
- les plaques comportent entre les deux séries de sorties des bords accolés à une paroi transversale du boîtier ;
- lesdites plaques ont une forme oblongue et s'étendent en aval de l'échangeur de chaleur dans le deuxième conduit et au travers des sorties du premier conduit et du deuxième conduit ;
- les deux zones de mixage sont disposées respectivement aux extrémités desdites plaques.

D'autres avantages et caractéristiques de l'invention ressortiront à la lecture de la description suivante faite à titre d'exemple et en référence aux dessins annexés dans lesquels :
la figure 1 est une vue en coupe d'un dispositif de conditionnement d'air selon l'invention, cette coupe étant faite selon le plan médian d'un passage d'air froid du système diviseur de flux ;
la figure 2 est semblable à la figure 1, mais la coupe est selon un plan médian d'un passage d'air chaud du système diviseur de flux ;
la figure 3 est une vue en perspective du système diviseur de flux du dispositif de conditionnement ;
Les figures 4 et 5 sont semblables aux figures 1 et 2 et montrent un dispositif de conditionnement d'air dans lequel les volets de mixage sont montés dans le système diviseur ;
la figure 6 montre en perspective un volet de mixage du dispositif de conditionnement des figures 4 et 5 ;
la figure 7 est une coupe selon la ligne VII-VII de la figure 2 ;
les figures 8 et 9 sont semblables aux figures 1 et 2 et montrent un système diviseur dont certaines parois comportent des orifices ;
les figures 10 et 11 sont semblables aux figures 1 et 2 et montrent un système diviseur équipé de parois déflectrices pour permettre de fournir un air de dégivrage plus chaud que l'air de ventilation ;
les figures 12 et 13 sont semblables aux figures 1 et 2 et montrent une variante de volet de dégivrage qui permet de régler les entrées des passages d'air froid ;
les figures 14 et 15 sont semblables aux figures 1 et 2 et montrent un dispositif de conditionnement d'air avec un volet additionnel ;
la figure 16 est une vue en perspective du volet additionnel des figures 14 et 15 ;
les figures 17 à 19 montrent respectivement une variante de réalisation du dispositif de conditionnement d'air des figures 14 à 16 ;
les figures 20 et 21, semblables aux figures 1 et 2, montrent un dispositif de conditionnement d'air équipé de moyens de réglage des débits d'air chaud et froid affectés à chaque chambre de mixage ;
les figures 22 et 23 montrent une variante des moyens de réglage des figures 20 et 21 ;
la figure 24 est une coupe selon la ligne XXIV-XXIV de la figure 25 d'une autre variante du système diviseur ; et
la figure 25 est une coup selon la ligne XXV-XXV de la figure 24.

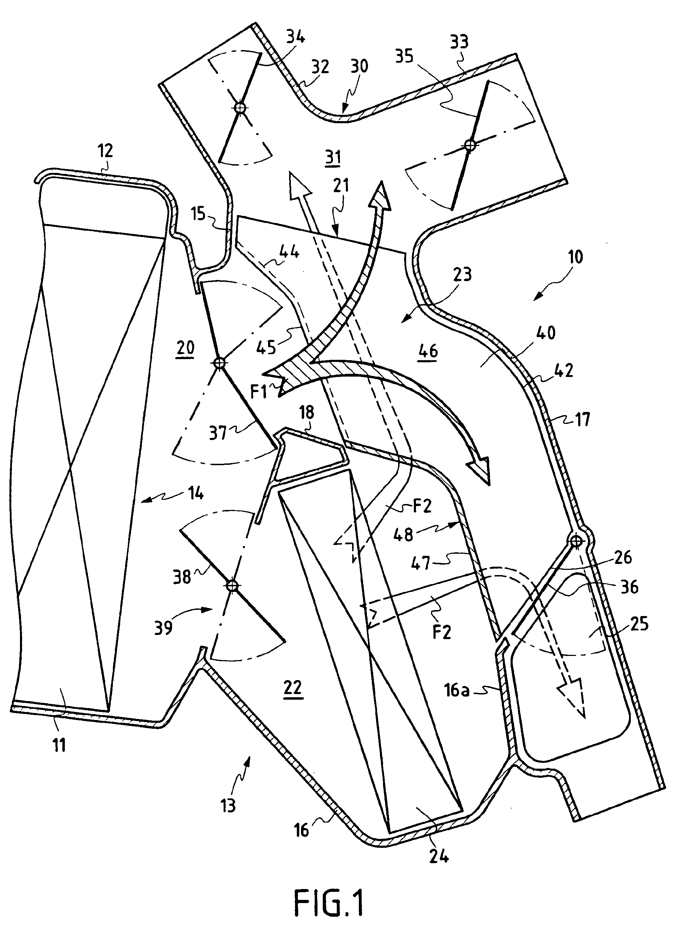

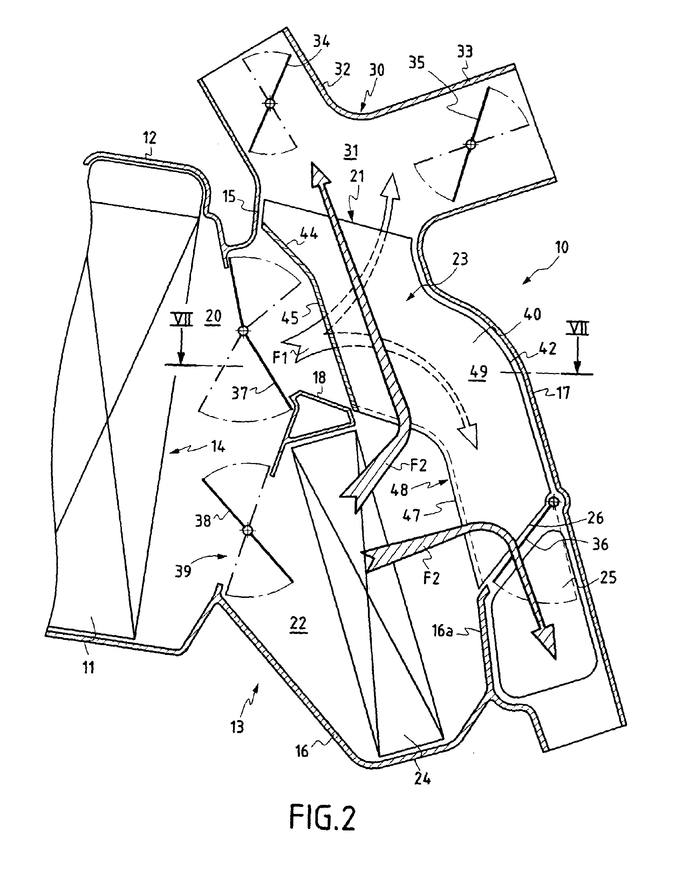

Les figures 1 et 2 montrent un dispositif de conditionnement d'air 10 pour véhicule, qui comporte en aval d'un évaporateur 11 monté à la sortie d'un conduit d'entrée d'air pulsé 12, un boîtier 13 ayant une entrée 14 pour recevoir de l'air froid fourni par l'évaporateur 11.

Ce boîtier 13 comporte de manière classique, une paroi supérieure 15, une paroi inférieure 16 en forme de U et une paroi arrière 17. Les parois 15, 16 et 17 s'étendent entre deux parois latérales non référencées sur les dessins. Une traverse 18 relie en outre les parois latérales. Cette traverse 18 partage l'intérieur du boîtier 13 en deux conduits d'air : un premier conduit 20 dirigé globalement vers le haut et reliant l'entrée 14 à une sortie 21 ménagée entre la paroi supérieure 15 et la paroi arrière 17, et un deuxième conduit 22, en forme de U disposé en dérivation entre l'entrée 14 et la sortie 23 ménagée entre la traverse 18 et la partie supérieure de la paroi arrière 17. Un échangeur de chaleur 24 est installé dans le deuxième conduit 22. Cet échangeur s'étend entre la traverse 18 et la partie inférieure de la paroi inférieure 16.

L'échangeur de chaleur 24 est sensiblement parallèle à la paroi arrière 17.

Entre l'aile arrière 16a de la paroi inférieure 16 et la partie inférieure de la paroi arrière 17 est prévue une chambre de mixage inférieure 25 destinée à alimenter en air conditionné les parties basses et la partie arrière de l'habitacle du véhicule équipée du dispositif 10. Cette chambre de mixage 25 communique avec l'intérieur du boîtier 13 par un orifice 26.

Le boîtier 13 est raccordé à un boîtier de distribution 30 au niveau de la sortie 21. Ce boîtier 30 définit une zone de mixage supérieure 31 qui alimente un conduit de dégivrage 32 et un conduit d'aération 33, ces conduits 32et 33 étant destinés à délivrer de l'air conditionné à des buses de dégivrage et à des bouches d'aération montées sur la planche de bord du véhicule. Des volets de distribution 34 et 35, du type papillon sont respectivement montés dans le conduit de dégivrage 32 et le conduit d'aération 33. L'orifice 26 prévu à l'entrée de la chambre de mixage inférieure 25 peut également être obturé par un volet drapeau 36.

La répartition de l'air froid délivré par l'évaporateur 11, entre le premier conduit 20 et le deuxième conduit 22, est réalisée au moyen de deux volets papillon conjugués 37 et 38. Le volet 37 permet de régler l'ouverture du passage situé entre la paroi supérieure 15 et la traverse 18, tandis que le volet 38 permet de régler l'ouverture de l'entrée 39 du deuxième conduit 22, cette entrée 39 étant délimitée par la traverse 18 et la paroi inférieure 16. Lorsque le volet 37 est dans la position extrême de fermeture du premier conduit 20, le volet 38 ouvre l'entrée 39 et tout l'air froid, délivré par l'évaporateur 11, transite par l'échangeur de chaleur 24. En revanche, lorsque le volet 38 obture l'entrée 39 du deuxième conduit 22. le volet 37 est dans une position d'ouverture maximale du premier conduit 20. Dans cette dernière position, tout l'air froid délivré par l'évaporateur 11 passe dans le premier conduit 20 et est dirigé vers la partie supérieure du boîtier 13.

Les volets 34, 35, 36, 37 et 38 sont montés pivotants autour d'axes transversaux sensiblement parallèles à la traverse 18 et portés par le parois latérales du boîtier 13.

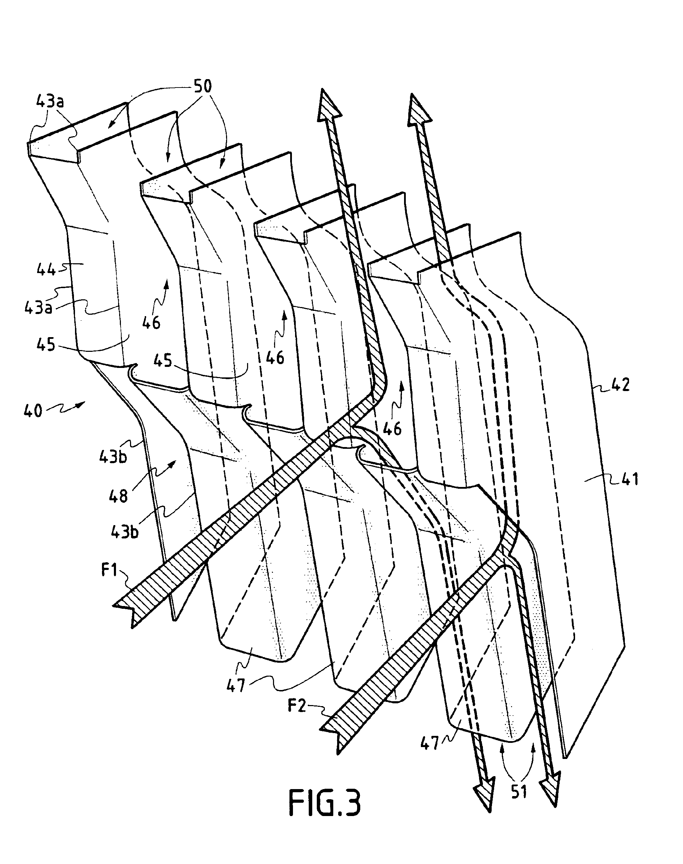

Selon l'invention un système diviseur 40 du flux d'air froid F1 qui transite par le premier conduit 20 et du flux d'air chaud F2 qui transite par l'échangeur de chaleur 24 est prévu dans ces conduits en aval de l'échangeur de chaleur 24 et du volet 37. Ce système diviseur 40, montré en détail sur la figure 3, comporte une pluralité de plaques parallèles 41, de forme globalement oblongue, qui s'étendent en hauteur entre l'orifice 26 d'entrée dans la chambre de mixage inférieure 25 et la sortie 21 ménagée entre la paroi supérieure 15 et la paroi arrière 17 du boîtier 13, et qui s'étendent dans le sens longitudinal du boîtier 13 entre la traverse 18 et la paroi arrière 17. Ces plaques 41 sont en outre parallèles aux parois latérales du boîtier 13. Les plaques 41 présentent des bords arrière 42 qui ont une configuration complémentaire à celle de la paroi arrière 17 et sont accolés à cette dernière.

Les bords avant 43a des plaques 41, situés dans le premier conduit 20, sont reliés, par paires, au moyen de parois de liaison 44, de manière à définir dans le conduit 20 des entrées 45 de passages d'air froid 46. De la même manière, les bords avant 43b des plaques 41, situés dans le deuxième conduit 22 sont reliés, par paires au moyen de parois de liaison 47, de manière à définir entre les parois de liaison 47 des entrées 48 de passage 49 d'air chaud. Les parois de liaison 44 et 47 sont disposées en alternance dans le sens transversal. Ainsi, une plaque 41 est reliée à une plaque adjacente par une paroi de liaison 44 au niveau de son bord avant supérieur 43a et à l'autre plaque adjacente par une paroi de liaison 47 au niveau de son bord avant inférieur 43b.

Les passages d'air froid 46 et les passages d'air chaud 49 sont ainsi disposés en alternance dans la direction transversale du boîtier 13, et chaque passage 46 ou 49 débouche dans la zone de mixage supérieure 31 par une sortie supérieure 50 et débouche dans la zone de mixage inférieure 25 par une sortie inférieure 51.

Les sorties supérieures 50 situées dans la sortie 21 du boîtier 13 délivrent ainsi, dans la zone de mixage supérieure 31, des flux secondaires alternés d'air froid et d'air chaud. Les sorties inférieures 51 situées dans l'orifice inférieur 26 du boîtier 13 délivrent également des flux secondaires d'air chaud et d'air froid alternés.

Le système diviseur 40 étant placé essentiellement dans le deuxième conduit 20, en aval de l'échangeur de chaleur 24, et au travers des sorties du premier conduit 20 et du second conduit 22, il occupe un volume inoccupé d'un boîtier de conditionnement d'air traditionnel, tout en permettant l'alimentation en air chaud et en air froid de deux zones de mixage 31 et 25 séparées.

En outre, les flux d'air froid et d'air chaud délivrés dans les zones de mixage sont divisés en une pluralité de flux secondaires alternativement chaud et froid dans le sens transversal ce qui assure une homogénéisation de la température de l'air à la sortie des zones de mixage.

De plus, l'air froid et l'air chaud circulant à contre-courant dans la zone médiane du système diviseur 40, il se produit déjà un échange de chaleur entre les deux flux dans cette zone.

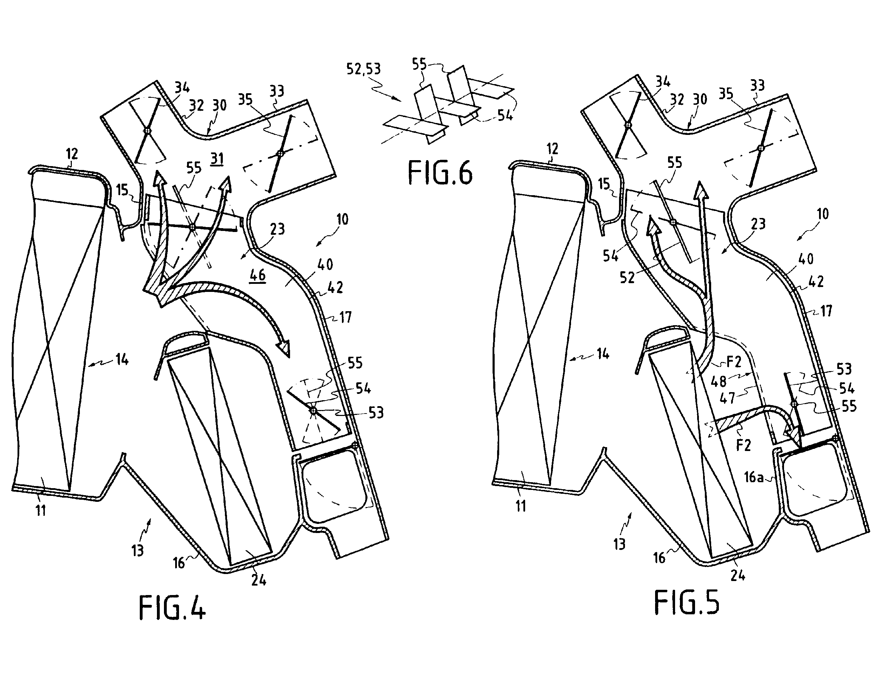

Les figures 4 à 6 montrent une variante de réalisation d'un dispositif de conditionnement d'air conforme à l'invention dans lequel les deux volets de mixage 37 et 38 décrits ci-dessus sont remplacés par deux volets multiples 52 et 53 montrés en détail sur la figure 6. Chacun des volets 52 et 53 comporte une pluralité de parois 54 susceptibles d'obturer les sorties 50 ou 51 des passages d'air froid 46 et une pluralités de parois 55 susceptibles d'obturer les sorties 50 ou 51 des passages d'air chaud. Les parois 55 sont décalées angulairement par rapport aux parois 54. Dans la position "tout chaud" des volets 52 et 53, montrée en gras sur les figures 4 et 5, les sorties de tous les passages d'air froid 46 sont obturées, et dans la position "tout froid", les sorties de tous les passages d'air chaud 49 sont obturées. Les commandes des deux volets 52 et 53 peuvent être conjuguées ou indépendantes.

Les plaques 41 peuvent être planes, mais elles peuvent avoir d'autres configurations, afin de favoriser un écart de température entre les airs délivrés par la zone de mixage supérieure 31 et la zone de mixage inférieure 25 ou entre différentes zones de l'appareil, par exemple la zone centrale et la zone latérale, ou entre le conduit de dégivrage 32 et le conduit d'aération 33. En général, il est demandé un air plus chaud dans les parties basses de l'habitacle du véhicule. Le dispositif 10 décrit ci-dessus favorise cette situation.

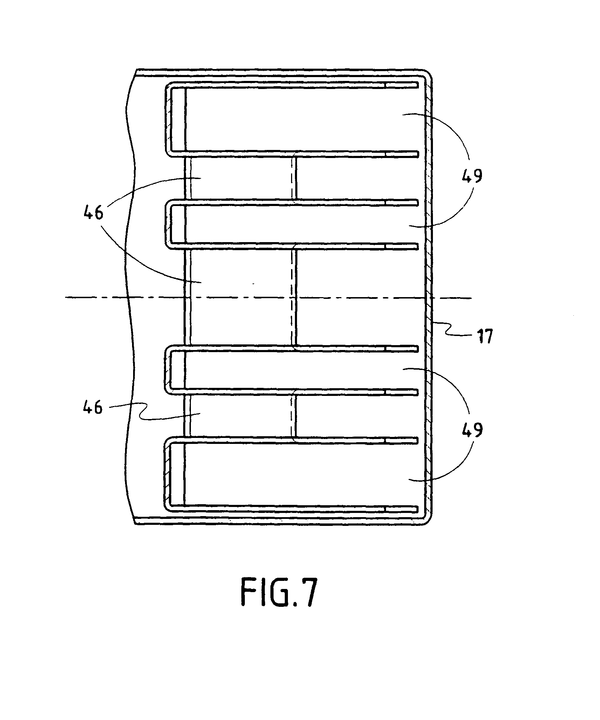

Les espacements entre les différentes plaques 41 peuvent être identiques, ou peuvent être différents. La figure 7 montre un système diviseur 40 qui comporte trois passages d'air froid 46 et quatre passages d'air chaud 49. Les deux passages d'air chaud 49 latéraux sont plus larges que les passages d'air chaud médians, et le passage d'air froid 46 central est plus large que les deux autres passages d'air froid. On conçoit qu'avec une telle configuration, les deux zones de mixage 31 et 25 recevront un air plus chaud dans leurs zones latérales et plus froid dans leur zone centrale.

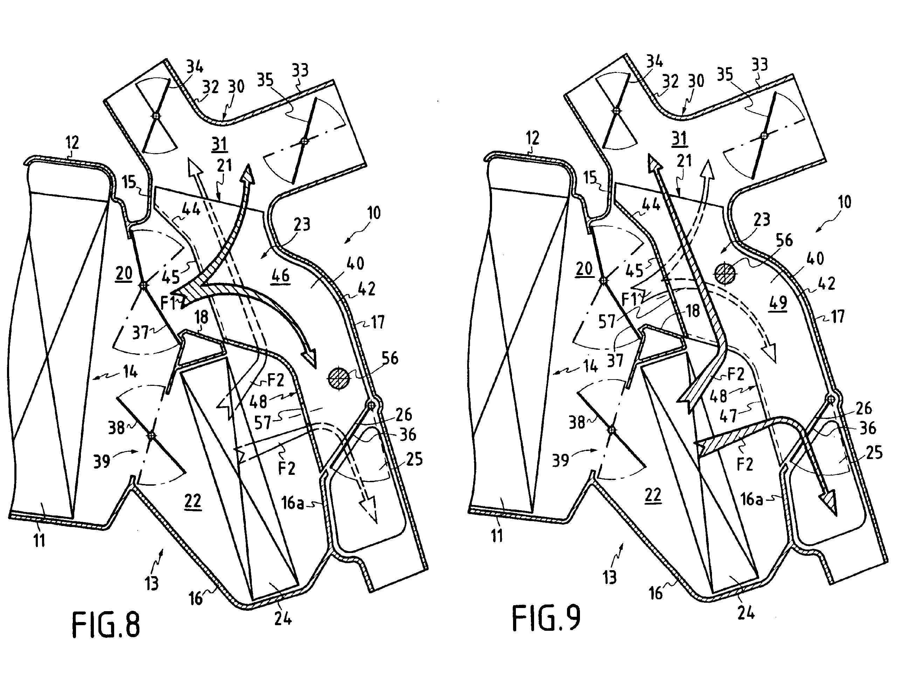

Les figures 8 et 9 montrent un système diviseur 40 dans lequel certaines plaques 41 comportent des orifices 56 qui permettent des échanges d'air entre les nappes d'air chaud et d'air froid. Des orifices complémentaires 57 peuvent également être ménagés dans les parois de liaison 44 et 47 afin d'admettre un faible débit d'air froid ou d'air 5 chaud dans les passages 46 ou 49.

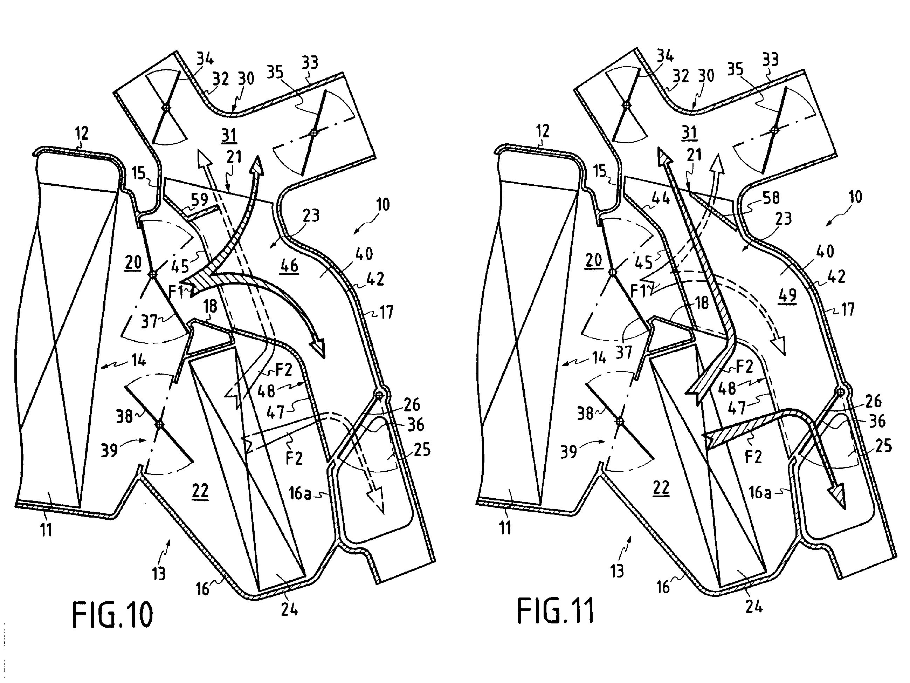

Afin de faire en sorte que le conduit de dégivrage 32 délivre un air plus chaud que le conduit de ventilation 33 en mode combiné dégivrage ventilation, le système diviseur 40, ainsi que cela est montré sur les figures 10 et 11, peut être équipé de parois déflectrices. Des parois déflectrices 58 sont ainsi prévues dans les branches supérieures des passages d'air chaud 49, afin de diriger l'air chaud débouchant par les orifices 50 vers le conduit de dégivrage 32. Les branches supérieures des passages d'air froid 46 peuvent également être équipées dans la partie supérieure de leur entrée 45 de parois déflectrices 59 qui dirigent les flux d'air froid débouchant par les orifices 50 vers le conduit de ventilation 33.

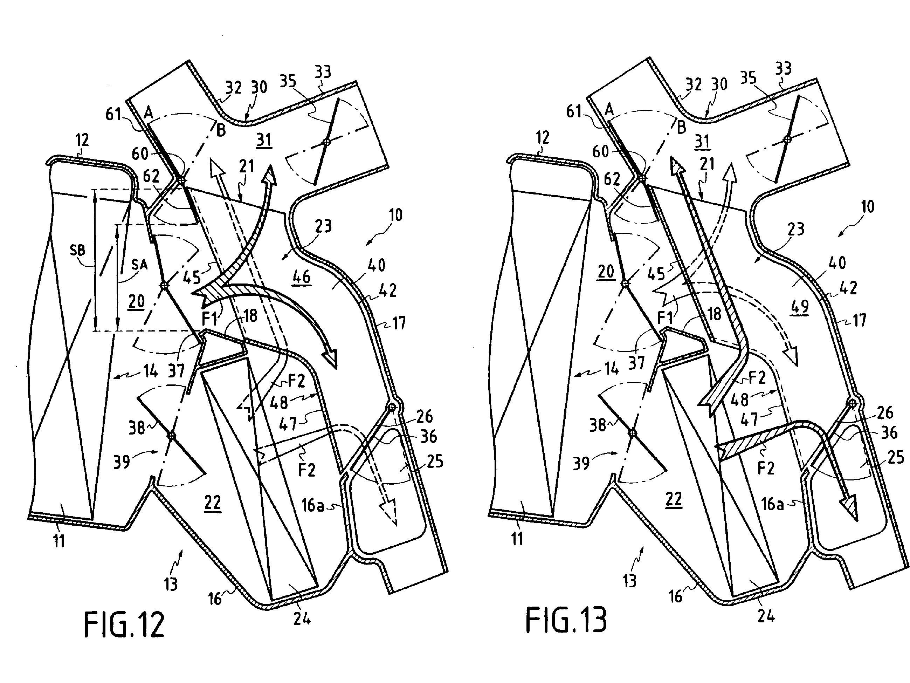

Les figures 12 et 13 montrent un dispositif de conditionnement d'air 10 conforme à celui décrit ci-dessus dans lequel le volet de dégivrage 34 est de type papillon et est monté pivotant autour d'un axe 60 situé près de la paroi supérieure 15 du boîtier 13 et dans la sortie 21. L'aile supérieure 61 de ce volet 34 est susceptible d'obturer le conduit de dégivrage 32, tandis que l'aile inférieure 62 de ce volet 34 est située dans le premier conduit 20 en aval du système diviseur 40. En position ouverte (position A) du volet 34, l'aile inférieure 62 est plaquée contre les parois de liaison 44, ce qui réduit la section des entrées 45 des passages d'air froid 46. En position fermée (position B) du volet 34, l'aile inférieure 62 libère une section plus importante des entrées 45 des passages d'air froid 46. Pour une même quantité d'air chaud, il y a plus d'air froid en mode chauffage + ventilation qu'en mode chauffage + dégivrage.

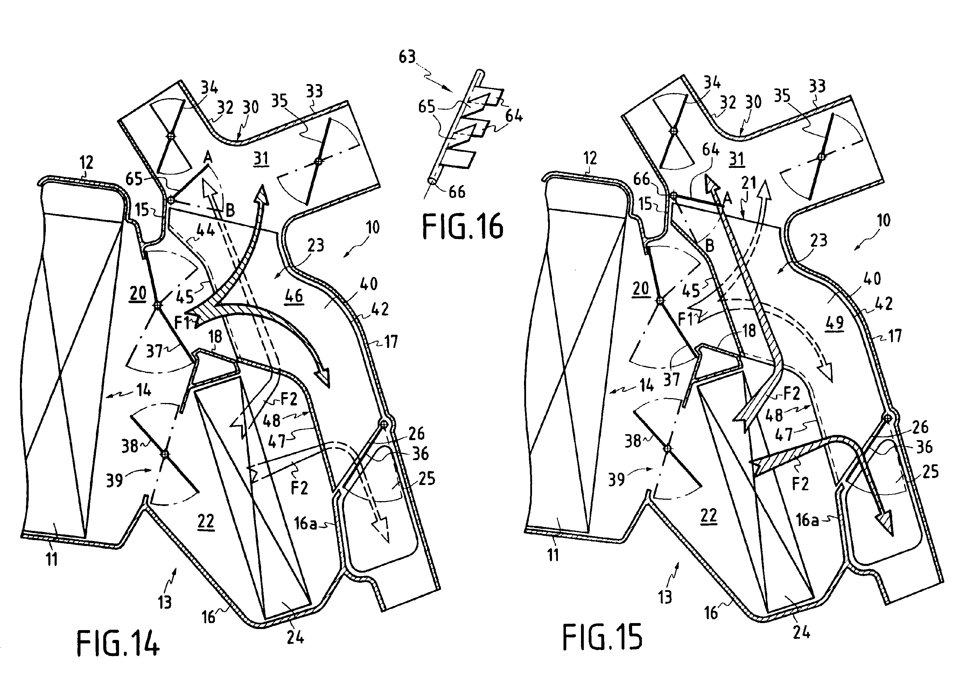

Les figures 14 à 16 montrent un dispositif de conditionnement d'air 10 conforme à celui montré sur les figures 1 et 2, dans lequel il est prévu, dans la zone de mixage supérieure 31, un volet additionnel 63 qui comporte deux séries de parois 64, 65 décalées angulairement et s'étendant à partir d'un axe 66. L'axe 66 est disposé près de la paroi supérieure 15 du boîtier 13 et dans la sortie 21. Les parois 64 permettent de régler les sections des sorties 50 des passages d'air froid 46 et les parois 65 règlent les sections des sorties 50 des passages d'air chaud 49. Lorsque le volet additionnel 63 est dans la position notée "A" sur les figures 14 et 15, il y a une réduction de la section du passage d'air chaud vers la zone de mixage supérieure 31 sans modification de la section du passage d'air froid. Lorsque le volet additionnel 63 est dans la position notée "B", il y a une réduction de la section du passage d'air froid vers la zone de mixage supérieure 31 sans modification de la section du passage d'air chaud.

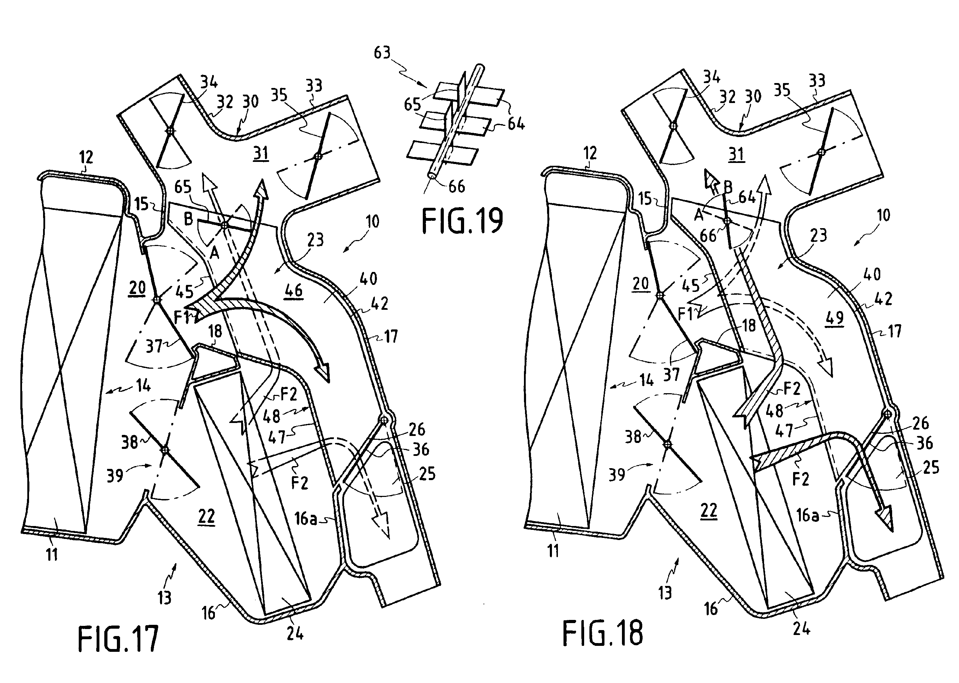

Les figures 17 à 19 montrent une variante de réalisation du dispositif de conditionnement d'air précédent. Le volet additionnel 63 comporte deux séries de parois 64, 65 du type papillon décalées de 90° environ. L'axe 66 de ce volet 63 est disposé sensiblement dans la zone médiane de la sortie 21 et est monté sur le système diviseur 40.

Les modes de réalisation montrés sur les figures 10 à 19 permettent de créer une différence de température entre l'air délivré vers le conduit de dégivrage 32 et l'air délivré vers le conduit de ventilation 33.

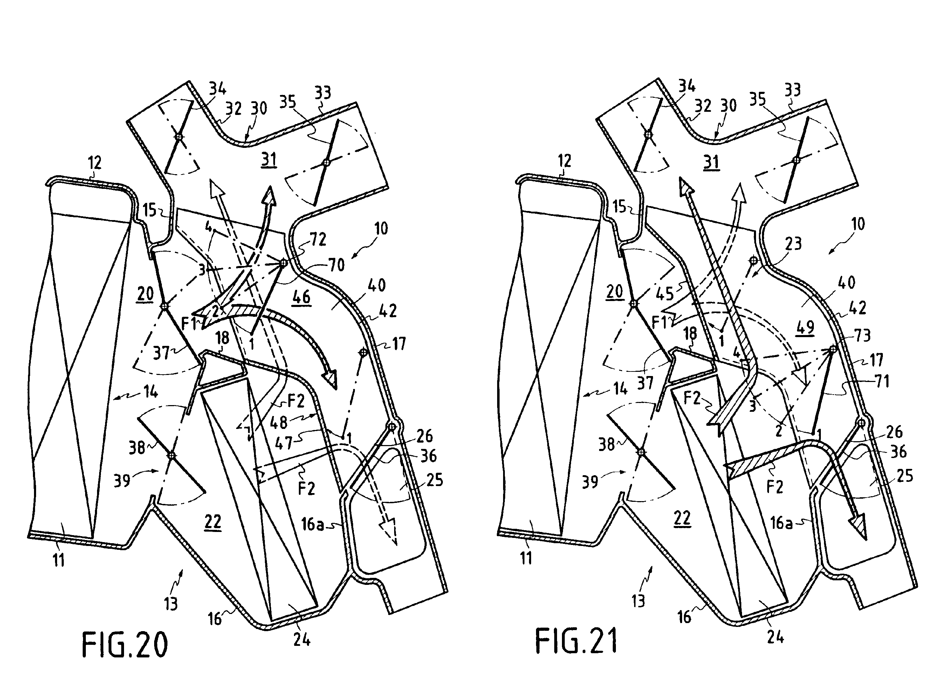

Les figures 20 à 23 montrent des dispositifs de conditionnement d'air, dans lesquels le système diviseur 40 est équipé de moyens de réglage des débits d'air chaud et d'air froid affectés à la première zone de mixage 31 et la deuxième zone de mixage 25. Selon une première variante de réalisation, montrée sur les figures 20 et 21, ces moyens comportent deux séries de volets 70 et 71. Les volets de la première série de volets 70, de type drapeau, sont disposés dans la zone supérieure des passages d'air froid 46 et pivotent autour d'un axe 72 situé près de la paroi arrière 17 du boîtier 13. Les volets de la deuxième série de volets 71, de type drapeau, sont disposés dans la zone inférieure des passages d'air chaud 49 et pivotent autour d'un axe 73 situé près de la paroi arrière 17 du boîtier 13. Les deux séries de volets 70 et 71 sont conjuguées ou à commande indépendante.

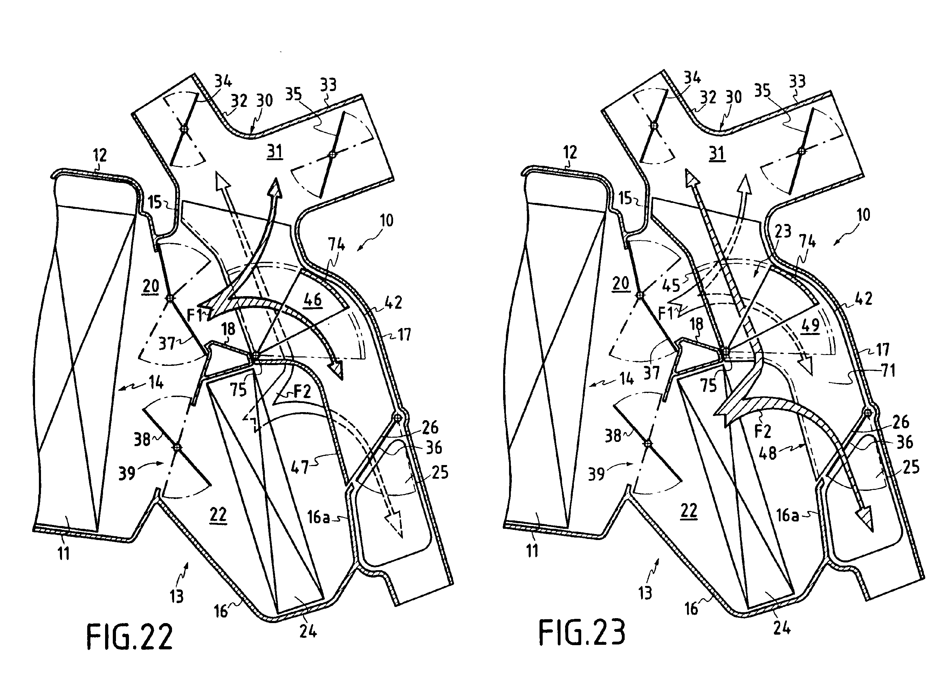

Selon une deuxième variante de réalisation montrée sur les figures 22 et 23, ces moyens de réglage comportent des volets tambour 74 dans les passages d'air froid 46 et les passages d'air chaud 49 qui sont portés par un axe 75 situé au voisinage de la traverse 18. Les parois cylindriques des volets tambour 74 sont au voisinage de la paroi arrière 17 du boîtier 13, dans une position intermédiaire. Lorsqu'elles sont en position basse, il y a une réduction des débits d'air chaud et d'air froid vers la zone de mixage inférieure 25. Lorsqu'elles sont en position haute, il y a une réduction des débits d'air chaud et froid vers la zone de mixage supérieure 31.

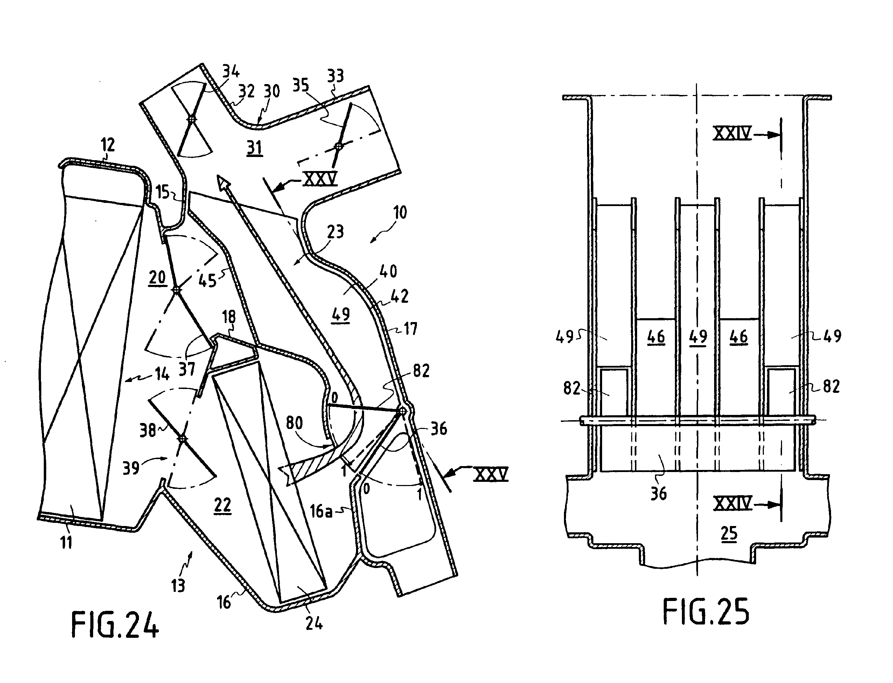

Les figures 24 et 25 montrent un dispositif de conditionnement d'air, dans lequel le répartiteur 40 présente un aménagement dans sa partie inférieure ainsi que des moyens de réglage des débits d'air chaud du dégivrage. Le système répartiteur 40 présente latéralement des passages d'air chaud 49 qui comportent des entrées rétrécies 80 obtenues grâce à une plaque de liaison complémentaire. Des ailettes 82 indépendantes du volet 36 commandent le débit d'air chaud additionnel envoyé dans la zone de mixage 31 dans les modes de dégivrage. Dans la position référencée 0 des ailettes 82, celles-ci obturent les passages latéraux 49 d'air chaud. Dans la position référencée 1 des ailettes 82, celles-ci libèrent les passages latéraux 49 d'air chaud et obturent les sorties latérales 51 d'air chaud. Dans le mode chauffage + aération centrale et latérale, le volet 36 est en position référencée 1 et les ailettes 82 sont en position référencée 0. Dans le mode chauffage + dégivrage, le volet 36 est en position référencée 1 et les ailettes 82 sont en position référencée 1. Dans notre exemple représenté aux figures 24 et 25, et avantageusement, les ailettes 82 et le volet 36 pivotent autour d'un même axe.

Les différentes variantes de réalisation décrites ci-dessus permettent de gérer des écarts de température variables entre la zone de mixage inférieure 25 et la zone de mixage supérieure 31, selon les modes de distribution choisis, ou de gérer les variations de débit entre les deux zones de mixage 25 et 31. Par exemple, on peut obtenir un écart de température plus faible pour le mode aération pieds + dégivrage que pour le mode aération pieds + aération centrale et latérale.

Enfin, le dispositif 10 ne nécessite pas de volets anti-retour, que l'on retrouve dans les dispositifs traditionnels qui ont deux chambres de mixage ayant chacune son système de mixage, ces volets anti-retour évitant le passage d'air d'une chambre vers l'autre, pour les modes de distribution n'utilisant que les bouches supérieures ou les bouches inférieures pour les positions intermédiaires des volets de mixage.

L'utilisation du système diviseur 40 décrit ci-dessus permet également de s'affranchir des problèmes d'échauffement parasite en position froid. En effet, lorsque le volet 38 est fermé, l'air froid circule par le premier conduit 20 et ne peut être en contact avec la surface chaude du faisceau de l'échangeur de chaleur 14 qu'après un circuit très complexe entre les plaques du système diviseur. La perte de charge résultante sera si élevée que l'air froid utilisera le chemin le plus direct vers les bouches de sortie ouvertes.

## Revendications

1. Dispositif de chauffage, ventilation et/ou climatisation de l'habitacle d'un véhicule automobile, du type comportant dans un boîtier (13) un premier conduit (20) pour transmettre un flux d'air froid (F1) et un deuxième conduit (22), dans lequel est installé un échangeur de chaleur (24), pour transmettre un flux d'air chaud (F2), lesdits conduits étant interposés entre une entrée d'air (14) et une première zone de mixage (31) délivrant de l'air mixé, ledit dispositif comportant en outre un système diviseur (40) des flux d'air qui partage le flux d'air froid (F1) délivré par le premier conduit (20) et le flux d'air chaud (F2) délivré par le deuxième conduit (22) en une pluralité de flux secondaires, ce système diviseur comportant, transversalement en alternance, une pluralité de passages d'air froid (46) ayant leurs entrées (45) dans le premier conduit (20) et une pluralité de passages d'air chaud (49) ayant leurs entrées (48) dans le deuxième conduit (22), **caracterisé par le fait que** lesdits passages (46, 49) présentent une première série de sorties (50) délivrant en alternance de l'air froid et de l'air chaud dans ladite première zone de mixage (31) et une deuxième série de sorties (51) délivrant en alternance de l'air chaud et de l'air froid dans une deuxième zone de mixage (25).

2. Dispositif selon la revendication 1, **caractérisé par le fait que** le système diviseur (40) des flux d'air comporte une pluralité de plaques (41) disposées transversalement dans le boîtier (13), à la jonction du premier conduit (20) et du deuxième conduit (22), ces plaques (41) étant reliées par paires dans le premier conduit (20) et le deuxième conduit (22) au moyen de parois de jonction (44, 47), afin de définir les entrées (45) des passages d'air froid (46) dans le premier conduit (20) et les entrées (48) des passages d'air chaud (49) dans le deuxième conduit (22).

3. Dispositif selon la revendication 2, **caractérisé par le fait que** les plaques (41) comportent entre les deux séries de sorties (50, 51) des bords (42) accolés à une paroi transversale (17) du boîtier (13).

4. Dispositif selon la revendication 3, **caractérisé par le fait que** lesdites plaques (41) ont une forme oblongue et s'étendent dans le deuxième conduit (22) en aval de l'échangeur de chaleur (24) et au travers des sorties du premier conduit (20) et du deuxième conduit (22).

5. Dispositif selon la revendication 4, **caractérisé par le fait que** les deux zones de mixage (31, 25) sont disposées respectivement aux extrémités desdites plaques (41).

6. Dispositif selon l'une quelconque des revendications 2 à 5, **caractérisé par le fait que** les plaques (41) ont des espacements variables afin de favoriser un écart de température entre la zone centrale et les zones latérales d'au moins une zone de mixage (31, 35).

7. Dispositif selon l'une quelconque des revendications 2 à 6, **caractérisé par le fait que** le système diviseur (40) présente des orifices de passage d'air (56, 57), soit dans certaines plaques (41), soit dans certaines parois de jonction (44, 47).

8. Dispositif selon l'une quelconque des revendications 2 à 7, dans lequel la première zone de mixage (31) alimente un conduit de dégivrage (32) et un conduit d'aération (33) dont les sections sont réglées respectivement par un volet de dégivrage (34) et un volet de ventilation (35), **caractérisé par le fait qu'**il comporte en outre des moyens pour créer ou accentuer la différence de température de l'air délivré vers les conduit de dégivrage (32) et le conduit d'aération (33).

9. Dispositif selon la revendication 8, **caractérisé par le fait que** les moyens pour créer ou accentuer la différence de température sont constitués par des parois déflectrices (58, 59) prévues dans certains passages (46, 49).

10. Dispositif selon la revendication 8, **caractérisé par le fait que** les moyens pour créer ou accentuer la différence de température comportent un volet additionnel (62, 63) dont la commande est conjuguée à la commande de distribution.

11. Dispositif selon la revendication 10, **caractérisé par le fait que** le volet additionnel (62) est solidaire du volet de dégivrage (34) et réduit la section des entrées (45) des passages d'air froid (46) en position ouverte du volet de dégivrage (34).

12. Dispositif selon la revendication 10, **caractérisé par le fait que** le volet additionnel (63) comporte une pluralité de premières parois (65) susceptibles de modifier la perte de charge dans les passages d'air froid (46) et une pluralité de deuxièmes parois (64) susceptibles de modifier la perte de charge dans les passages d'air chaud (49), les deuxièmes parois étant décalées angulairement par rapport aux premières parois.

13. Dispositif selon l'une quelconque des revendications 2 à 12, **caractérisé par le fait qu'**il est en outre prévu dans le système diviseur (40) des moyens de réglage des débits d'air chaud et d'air froid affectés à la première zone de mixage (31) et à la deuxième zone de mixage (25).

14. Dispositif selon la revendication 13, **caractérisé par le fait que** les moyens de réglage comportent une première série de volets drapeau (70) disposés dans les passages d'air froid (46) et une deuxième série de volets drapeau (71) disposés dans les passages d'air chaud (49).

15. Dispositif selon la revendication 13, **caractérisé par le fait que** les moyens de réglage comportent des volets tambour (74) disposés en alternance dans les passages d'air froid (46) et les passages d'air chaud (49).

## Claims

1. Heating, ventilation and/or air-conditioning device for a passenger compartment of a motor vehicle, of the type comprising, in a case (13), a first duct (20) for transmitting a flow of cold air (F1) and a second duct (22), in which a heat exchanger (24) is installed, in order to transmit a flow of hot air (F2), said ducts being interposed between an air intake (14) and a first mixing zone (31) delivering mixed air, said device furthermore including an air-flow divider system (40) that divides the flow of cold air (F1) delivered by the first duct (20) and the flow of hot air (F2) delivered by the second duct (22) into a plurality of secondary flows, this divider system comprising, transversely in alternation, a plurality of cold-air passages (46) having their inlets (45) in the first duct (20) and a plurality of hot-air passages (49) having their inlets (48) in the second duct (22), **characterized in that** said passages (46, 49) have a first series of outlets (50) delivering in alternation cold air and hot air into said first mixing zone (31) and a second series of outlets (51) delivering in alternation hot air and cold air into a second mixing zone (25).

2. Device according to Claim 1, **characterized in that** the air-flow divider system (40) comprises a plurality of plates (41) placed transversely in the case (13), at the junction between the first duct (20) and the second duct (22), these plates (41) being joined in pairs in the first duct (20) and the second duct (22) by means of joining walls (44, 47) so as to define the inlets (45) of the cold-air passages (46) in the first duct (20) and the inlets (48) of the hot-air passages (49) in the second duct (22).

3. Device according to Claim 2, **characterized in that** the plates (41) have, between the two series of outlets (50, 51), edges (42) juxtaposed with a transverse wall (17) of the case (13).

4. Device according to Claim 3, **characterized in that** said plates (41) have an oblong shape and extend in the second duct (22) downstream of the heat exchanger (24) and through the outlets of the first duct (20) and the second duct (22).

5. Device according to Claim 4, **characterized in that** the two mixing zones (31, 25) are placed at the ends of said plates (41) respectively.

6. Device according to any one of Claims 2 to 5, **characterized in that** the plates (41) have variable spacings so as to promote a temperature difference between the central zone and the lateral zones of at least one mixing zone (31, 35).

7. Device according to any one of Claims 2 to 6, **characterized in that** the divider system (40) has air passage orifices (56, 57) either in certain plates (41) or in certain joining walls (44, 47).

8. Device according to any one of Claims 2 to 7, in which the first mixing zone (31) feeds a de-icing duct (32) and an aerating duct (33), the cross sections of which are adjusted by a de-icing flap (34) and a ventilating flap (35) respectively, **characterized in that** it further includes means for creating or accentuating the temperature difference of the air delivered to the de-icing duct (32) and the aerating duct (33).

9. Device according to Claim 8, **characterized in that** the means for creating or accentuating the temperature difference are formed by deflecting walls (58, 59) provided in certain passages (46, 49).

10. Device according to Claim 8, **characterized in that** the means for creating or accentuating the temperature difference include an additional flap (62, 63), the control of which is conjugate with the distribution control.

11. Device according to Claim 10, **characterized in that** the additional flap (62) is integral with the de-icing flap (34) and reduces the cross section of the inlets (45) of the cold-air passages (46) in the open position of the de-icing flap (34).

12. Device according to Claim 10, **characterized in that** the additional flap (63) comprises a plurality of first walls (65) capable of modifying the pressure drop in the cold-air passages (46) and a plurality of second walls (64) capable of modifying the pressure drop in the hot-air passages (49), the second walls being angularly offset relative to the first walls.

13. Device according to any one of Claims 2 to 12, **characterized in that** also provided in the divider system (40) are means for adjusting the hot-air and cold-air flow rates assigned to the first mixing zone (31) and to the second mixing zone (25).

14. Device according to Claim 13, **characterized in that** the adjusting means comprise a first series of flag-type flaps (70) placed in the cold-air passages (46) and a second series of flag-type flaps (71) placed in the hot-air passages (49).

15. Device according to Claim 13, **characterized in that** the adjusting means comprise drum-type flaps (74) placed in alternation in the cold-air passages (46) and the hot-air passages (49).

## Patentansprüche

1. Heiz-, Belüftungs- und/oder Klimatisierungsvorrichtung für die Fahrgastzelle eines Kraftfahrzeugs, des Typs, der in einem Gehäuse (13) eine erste Leitung (20) aufweist, um einen Kaltluftstrom (F1) zu übertragen, und eine zweite Leitung (22), in der ein Wärmeaustauscher (24) installiert ist, um einen Warmluftstrom (F2) zu übertragen, wobei die Leitungen zwischen einem Lufteingang (14) und einer ersten Mischzone (31) eingefügt sind, die gemischte Luft liefert, wobei die Vorrichtung ferner ein Teilungssystem (40) der Luftströme aufweist, das den Kaltluftstrom (F1), der von der ersten Leitung (20) geliefert wird, und den Warmluftstrom (F2), der von der zweiten Leitung (22) geliefert wird, in mehrere Nebenströme teilt, wobei dieses Teilungssystem quer abwechselnd mehrere Kaltluftdurchgänge (46) aufweist, deren Eingänge (45) in der ersten Leitung (20) liegen, und mehrere Warmluftdurchgänge (49), deren Eingänge (48) in der zweiten Leitung (22) liegen, **dadurch gekennzeichnet, dass** die Durchgänge (46, 49) eine erste Reihe von Ausgängen (50) aufweisen, die abwechselnd Kaltluft und Warmluft in die erste Mischzone (31) liefern, und eine zweite Reihe von Ausgängen (51), die abwechselnd Warmluft und Kaltluft in eine zweite Mischzone (25) liefern.

2. Vorrichtung nach Anspruch 1, **dadurch gekennzeichnet, dass** das Teilungssystem (40) der Luftströme mehrere Platten (41) aufweist, die quer in dem Gehäuse (13) an der Verbindung der ersten Leitung (20) und der zweiten Leitung (22) angeordnet sind, wobei diese Platten (41) paarweise in der ersten Leitung (20) und der zweiten Leitung (22) mittels Verbindungswänden (44, 47) verbunden sind, um die Eingänge (45) der Kaltluftdurchgänge (46) in der ersten Leitung (20) und die Eingänge (48) der Warmluftdurchgänge (49) in der zweiten Leitung (22) zu definieren.

3. Vorrichtung nach Anspruch 2, **dadurch gekennzeichnet, dass** die Platten (41) zwischen den zwei Reihen von Ausgängen (50, 51) Ränder (42) an eine Querwand (17) des Gehäuses (13) gefügt aufweisen.

4. Vorrichtung nach Anspruch 3, **dadurch gekennzeichnet, dass** die Platten (41) eine längliche Form haben und sich in der zweiten Leitung (22) stromabwärts des wärmeaustauschers (24) und durch Ausgänge der ersten Leitung (20) und der zweiten Leitung (22) erstrecken.

5. Vorrichtung nach Anspruch 4, **dadurch gekennzeichnet, dass** die zwei Mischzonen (31, 25) jeweils an den Enden der Platten (41) angeordnet sind.

6. Vorrichtung nach einem der Ansprüche 2 bis 5, **dadurch gekennzeichnet, dass** die Platten (41) variable Beabstandungen haben, um einen Temperaturunterschied zwischen der zentralen Zone und den Seitenzonen mindestens einer Mischzone (31, 35) zu begünstigen.

7. Vorrichtung nach einem der Ansprüche 2 bis 6, **dadurch gekennzeichnet, dass** das Teilungssystem (40) Luftdurchgangsöffnungen (56, 57) entweder in bestimmten Platten (41) oder in bestimmten Verbindungswänden (44, 47) aufweist.

8. Vorrichtung nach einem der Ansprüche 2 bis 7, bei der die erste Mischzone (31) eine Entfrostungsleitung (32) und eine Belüftungsleitung (33) versorgt, deren Querschnitte jeweils durch eine Entfrostungsklappe (34) und eine Belüftungsklappe (35) eingestellt werden, **dadurch gekennzeichnet, dass** sie ferner Mittel aufweist, um den Temperaturunterschied der zu der Entfrostungsleitung (32) und der Belüftungsleitung (33) gelieferten Luft zu schaffen oder zu betonen.

9. Vorrichtung nach Anspruch 8, **dadurch gekennzeichnet, dass** die Mittel zum Schaffen oder Betonen des Temperaturunterschieds aus Ablenkwänden (58, 59) bestehen, die in bestimmten Durchgängen (46, 49) vorgesehen sind.

10. Vorrichtung nach Anspruch 8, **dadurch gekennzeichnet, dass** die Mittel zum Schaffen oder Betonen des Temperaturunterschieds eine zusätzliche Klappe (62, 63) aufweisen, deren Steuerung mit der Verteilungssteuerung kombiniert ist.

11. Vorrichtung nach Anspruch 10, **dadurch gekennzeichnet, dass** die zusätzliche Klappe (62) fest mit der Entfrostungsklappe (34) verbunden ist und den Querschnitt der Eingänge (45) der Kaltluftdurchgänge (46) in offener Stellung der Entfrostungsklappe (34) verringert.

12. Vorrichtung nach Anspruch 10, **dadurch gekennzeichnet, dass** die zusätzliche Klappe (63) mehrere erste Wände (65) aufweist, die den Lastverlust in den Kaltluftdurchgängen (46) modifizieren können, und mehrere zweite Wände (64), die den Lastverlust in den Warmluftdurchgängen (49) modifizieren können, wobei die zweiten Wände winkelig in Bezug auf die ersten Wände versetzt sind.

13. Vorrichtung nach einem der Ansprüche 2 bis 12, **dadurch gekennzeichnet, dass** in dem Teilungssystem (40) ferner Einstellmittel des Kaltluftdurchsatzes und Warmluftdurchsatzes, die der ersten Mischzone (31) und der zweiten Mischzone (25) zugewiesen sind, vorgesehen sind.

14. Vorrichtung nach Anspruch 13, **dadurch gekennzeichnet, dass** die Einstellmittel eine erste Reihe von Fahnenklappen (70) aufweisen, die in den Kaltluftdurchgängen (46) angeordnet sind, und eine zweite Reihe von Fahnenklappen (71), die in den Warmluftdurchgängen (49) angeordnet sind.

15. Vorrichtung nach Anspruch 13, **dadurch gekennzeichnet, dass** die Einstellmittel Trommelklappen (74) aufweisen, die abwechselnd in den Kaltluftdurchgängen (46) und den Warmluftdurchgängen (49) angeordnet sind.
